# EUROPEAN PATENT APPLICATION

(11) **EP 1 326 402 A1**
(43) Date of publication of application: **09.07.2003**
(21) Application number: 02425002.9
(22) Date of filing: 07.01.2002
(51) Int. Cl.: H04L 29/06

(54) **System and method for data transfer between media asset management systems**

(71) Applicant: RAI RADIOTELEVISIONE ITALIANA (S.p.A.), 00195 Roma (IT)
(72) Inventor: Messina, Alberto, 10155 Torino (IT)
(74) Representative: Spandonari, Carlo, Dr. Ing.

(57) **Abstract**

For the exchange of data among *media asset management* systems (10,20) using different proprietary data models for representing *media assets* (11,21), an intermediate data model (50) is defined, preferably comprising an extension of the XML language or other *markup* language, and, on one hand, aplurality of downloaders (12) are used for mapping each proprietary data model onto the intermediate data model and, on the other hand, a plurality of adapters (23) are used for mapping the intermediate data model onto each proprietary data model.

## Description

### DISCLOSURE

This invention is concerned with data exchange between media asset management systems. This expression refers, in the present specification, to systems for archiving, documenting and publishing metadata concerning objects such as video, audio, paper documents, photographs, pictures and the like.

With the spread of digital data archiving in a highly structured form, the need often arises to export data from a first system to a second, differently structured system. This kind of need arises, for instance, when exporting multimedial metadata that are contained in a main catalog, such as the Catalogo Multimediale RAI, to a peripheral system for processing intermediate multimedial products for publication on the Internet, and usually assembled from dedicated development tools, for instance Informix Media360.

Both the catalog and the peripheral system are characterized by a proprietary logical model, so that, in order to exchange information between the two systems, it is necessary to adjust the logical model of the catalog to the logical model of the peripheral system, where logical model refers to tables, reports, data format and generally all the structures necessary for the definition and understanding of a document.

When meeting the above problems of data exchange, the conventional approach has been to build an *ad hoc* application having the task of transferring each data from the starting model (Catalog) to the destination model (Media360), and to incorporate the sematic correspondence of both models into such application.

With the spread of data processing systems, the proliferation of *media asset management* systems and the need to share and exchange information among an increasing number of applications, the above mentioned approach for importing and exporting data is no longer acceptable, because each system has then to know the representation logic and the data model of all systems with which it is to converse. This situation makes it necessary to build a new application capable of translating from one system to the other, with considerable time consumption and obvious disadvantages. Moreover, each change in one of the systems affects all the other systems, which have to be updated if they are to understand the changes in the data model of the modified system. This makes it necessary to modify the matching mechanism, not only to cope with every new need for importing/exporting data to/from new systems which are incorporated into the environment, but also whenever even one of then is modified in its data model or representation logic.

A second, considerable problem comes from the number of matching mechanisms which are necessary for the exchange of data among systems, such number being proportional to the square of the number of existing systems. This obviously affects the scalability of the data exchange system, and considerably increases the computational complexity and manageability as the number of *media asset management* systems is increased.

Further difficulties arise when the two systems taking part in the exchange do not have the same mechanism of data persistence, e.g. when one of the systems is based on linear files while the other system is based on a relational database arrangement (RDBMS).

The main object of this invention is to overcome the above recited problems and drawbacks, by providing a method and system for the exchange, transfer and sharing of data that is more easily adaptable to heterogeneous media asset management systems.

Within the above object, the invention aims at defining an intermediate logical model upon an intermediate persistence structure, so that each system that is involved in the data exchange shall only conform to the intermediate model, both in terms of logic and of the mechanism of persistence, with consequent considerable reduction of the complexity of the operation.

The above and other objects, such as will appear more clearly below, are attained by a data interchange system in media asset management systems, where each media asset management system uses a proprietary data model for the representation of media assets, characterized in that said data interchange system comprises an intermediate data model, a plurality of downloaders mapping each proprietary data model onto the intermediate data model, and a plurality of adapters mapping the intermediate data model onto each proprietary data model.

Advantageously, the intermediate data model is an extension of a mark-up language, which extension is a dictionary of terms and structures adapted to represent the media assets. The expression *markup,* or *tag,* refers to an item enclosed between angle brackets, in the style of the well-known HTML language (HyperText Markup Language).

The dictionary preferably comprises a kernel, defining the structures of the media assets, and a peripheral structure defining the properties of the media assets and any relations among the media assets.

Preferably, the kernel defines, in the markup language, an object capable of representing a media asset; the size of a media asset; a local geometrical reference frame having the set of represented extensive properties as its axes; a subset of properties capable of univocally identifying a media asset. The peripheral structure defines, in a manner independent from the kernel, descriptors and identifiers representing the descriptions and indentifications of the media asset; the definition of the mapping systems between the reference frame local to the *media asset* and the external reference systems; the set roles and the relation roles.

Advantageously, properties are classified in two different categories: intensive, or absolute, properties, which expression denotes properties having a meaning not depending on the context, and extensive properties, i.e. properties that are only valid in a definite region of the *media asset.*

Conveniently, a descriptor or identifier can be contextualized within another descriptor or identifier, such expression denoting that the information represented by the contextualized descriptor or identifier is completed by the information of the contextualizing descriptor or identifier. Contextualization may be recursive, so that contextualized descriptors or identifiers can serve as a context for other descriptors or identifiers.

Moreover, a descriptor or identifier can be represented by a property, which may be classified by *layers.*

Further features and advantages of the invention will appear in more evidence from the following detailed disclosure, given by way of non-limiting example and shown in the accompanying figures, wherein:
Figure 1 is a block diagram showing a schematic example of a data transfer mechanism from a first *media asset management* system to a second *media asset management* system according to the invention;
Figure 2 is a block diagram schematically showing a data transfer mechanism between different *media asset management* systems, according to the invention;
Figure 3 is a block diagram showing an example of a graph between media assets;
Figura 4 is a block diagram showing an extension mechanism for implementing a system according to the invention.

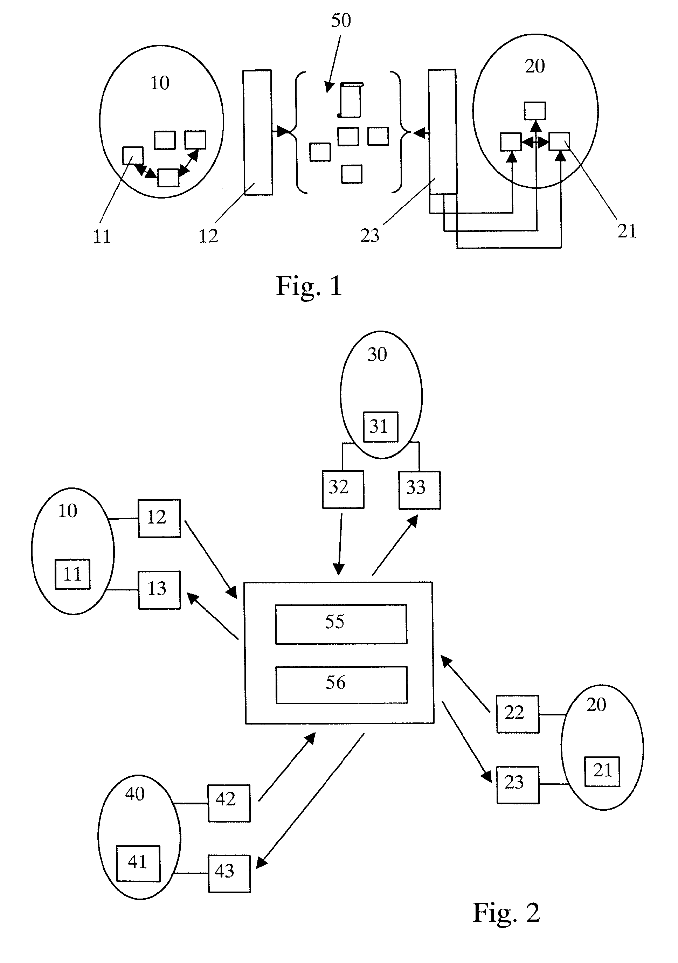

With reference to Figure 1, the simplest case of data exchange among media assets consists in transferring the data from a first system 10 of media asset 11 to a second system 20 of media asset 21, going through an intermediate representation. The Figure also shows a downloader 12 and an adapter 23. Block 50 schematizes a representation of data according to an intermediate data model, as will be explained below.

Figure 2 shows further details of the inventive concept of this invention, by schematically showing four distinct *media asset management systems* 10, 20, 30 e 40, each possessing an own respective data model 11, 21, 31, 41, an own downloader 12, 22, 32, 42 and an own adapter 13, 23, 33, 43.

The operation of the system according to the invention is as follows.

Each *media asset management* system 10, 20, 30, 40 uses, during its canonical operation, its own data model 11, 21, 31, 41. Whenever a first system 10 needs to transfer contents to a second system 20, downloader 12 converts the data format used in system 10 to the format defined in the intermediate model 50.

Adapter 23 of the second system 20 recovers the information belonging to the data of the first system 10, and having been converted to the intermediate format 50, and, in its turn, converts it to the proprietary format of system 20.

Attaching further *media asset management* systems 30, 40 to the environment only requires writing corresponding downloaders 41, 51 and adapters 42, 52, in a manner completely transparent to systems 10, 20 which were already present in the environment.

The implementation of intermediate data 50, which incorporates the inventive concept of the invention, should therefore be neutral with respect to whatever plausible representation of the systems 10, 20, 30, 40, which are to be interconnected. It has been found that the implementation can be more easily applied if it is based on shareable principles of representation and if it is expressed in a language constituting a standard.

In this context and with these premises, a preferred embodiment of the data interchange system between media asset management systems will now be described. The embodiment should in no way be construed as a limiting, but only as an examplary instance of the inventive concept on which the invention is based.

The language used for this embodiment is XML (eXtensible Markup Language), a known, simplified dialect of SGML, developed by W3C. XML is substantially defined as a set of syntactical and grammatical rules for specifying the contents and structure of text documents utilizing *"markup".*

The state of the art makes available a number of pre-constituted software libraries, mainly written in the Java language, for creating and manipulating XML documents. Moreover, tools of syntactical validation are also available, i.e. tools for checking compatibility between instances of XML documents, which contain the data, and the patterns, which define contents and structures. Each of these products can be utilized in the implementation of the embodiment here disclosed, the choice being irrelevant within the scope of the invention.

The vocabulary of terms and structures by which the objects of interest are represented for the interchange of data according tho this invention, and implemented in the XML format, is identified in this document with the acronym "MADL" (*Media Asset Description Language*). By this language it is possible to represente in XML properties and relations of objects (assets) present in a generic system of *media asset management,* as described below.

The above vocabulary is subdivided into a first structure, "kernel" 55, and a second structure, "peripheral structure" 56. The former defines the basic concepts of constitution and representation of the media assets, whole the latter defines the modes of representation of the properties of the media assets and of the relations between media assets, by defining the XML data structures in practice.

According to the specification of the MADL language, for the definition of a document structure it is necessary, on the one hand, to completely define the peripheral structures 56 according to the requirements and conditions of the utilization context and, on the other hand, to implement an extension of the generic structures of kernel 55.

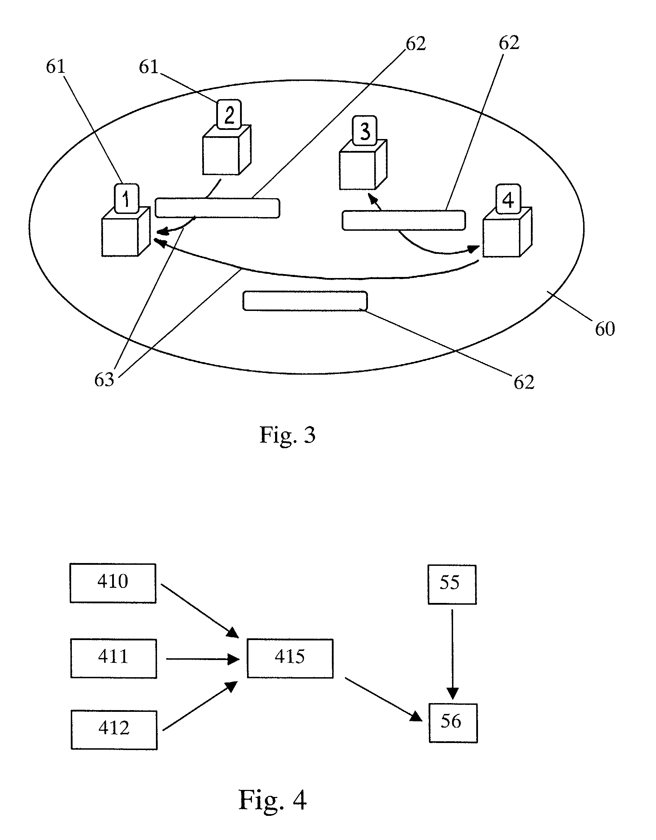

Accordingly, the definition of peripheral structure 56 is not a part of the MADL specification, which, on the other hand, does include the extension mode of kernel 55, which is illustrated below with reference to Figure 4.

The structure of kernel 55 provides that the basic objects of the representation are the media assets, which represent, in XML, the objects handled and represented by the actual systems 10, 20, 30, 40.

A media asset is physically defined in MADL by specifying the number of representative dimensions. By way of example, if a media asset is a photograph, two dimensions are used.

To each *media asset* a local geometrical reference frame is associated, which has the set of represented extensive properties as its axes.

Each media asset is univocally identifiable by certain of its properties leading to a distinctive criterion among the several meadia assets, and may optionally be described at differnet levels by its extensive properties (which hold, as stated above, in a definite region of the media asset), or its intesive properties.

The specification of the MADL language also comprises the option of specifying mapping functions between the local reference frame of the media asset and an external reference frame.

It is also possible to define sets of media assets that are related to one another, where each media asset can have a set role.

With reference to the peripheral structure of the MADL language, the descriptors and the identifiers, i.e. the hierarchies of items and attributes which represent the descriptions and identifications of the media assets, the definition of the mapping functions between the local reference frame of the media assets and the external reference frames and the definition of the set roles and the relation roles are defined independently from the structure of kernel 55.

With further reference to the preferred embodiment, an implementation of the MADL language will now be described by way of example, including the features generically described above, the example be useful for a further clarification of how the invention is put into practice.

In the above implementation, the main elements XML in a MADL document are the MediaAsset (MA). Moreover, sets of MediaAsset, called MediaAssetGroup, are defined and placed in relation to one another by means of one or more graphs, called MediaAssetGraph, and useful for representing in XML the relations between the objects.

The definition syntax of such objects in XML is as shown on Table 1 below.

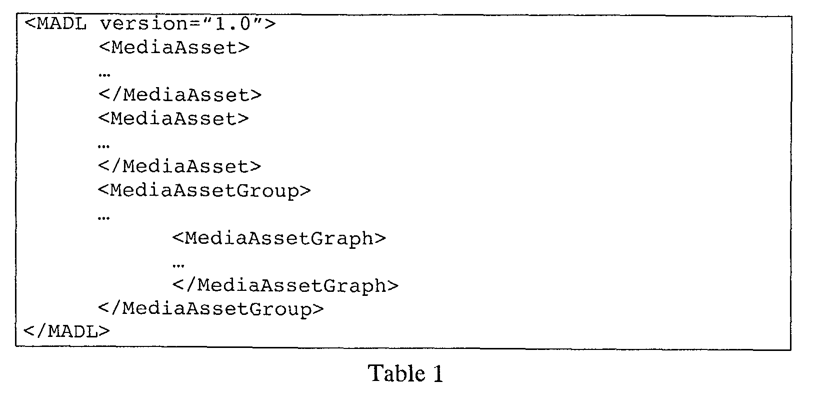

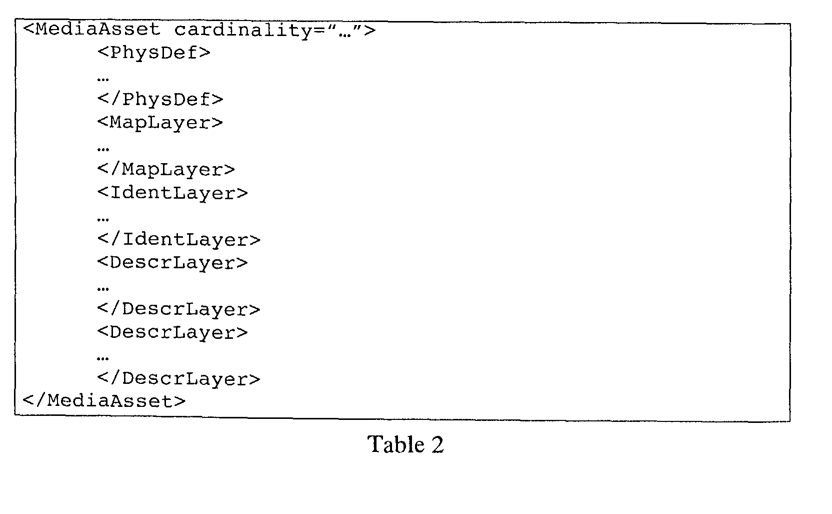

A *media asset* is represented by: a physical definition, made by means of a *tag* PhysDef, and a cardinality, defined by a *tag* cardinality, which identifies the number of represented dimensions; a layer of physical referencing, defined by a *tag* MapLayer for the mapping functions; a layer of identificative properties, defined by a *tag* IdentLayer, and one or more layers of descriptive properties, defined by a *tag* DescrLayer. The basic definition pattern of a *media asset* is therefore defined as illustrated on Table 2.

### Descriptors and Identifiers

The descriptors are defined by means of a *tag* Descriptor, and constitute an XML data structure for representing the descriptive properties of the *media asset.*

The identifiers are defined by means of a *tag* Identifier, and constitute an XML data structure for representing the identificative properties of the *media asset.*

A descriptor represents the extensive properties by means of a *tag* ExtDescriptor and the intensive properties by means of a *tag* IntDescriptor.

The extensive properties, as already stated, are properties that are valid in a region of the *media asset* defined on the local reference frame.

An extensive descriptor therefore has a dimensional reference to the validity region of the extensive property which it represents. Such validity regions, in the preferred embodiment herein disclosed, turn out to be sets of *hypercubes* having a dimension equal to the cardinality of the *media asset.*

The cardinality specified for the *media asset* therefore implies a constraint on the dimensionality of the validity regions of the descriptions: the reference hypercubes for the extensive descriptions, which are represented in the MADL language by means of the *tags* DimRef within the *tag* ExtDescriptor, should therefore have a dimension equal to the cardinality of the *media asset.*

Table 3 shows the definition pattern for the descriptors and the identifiers according to the MADL language.

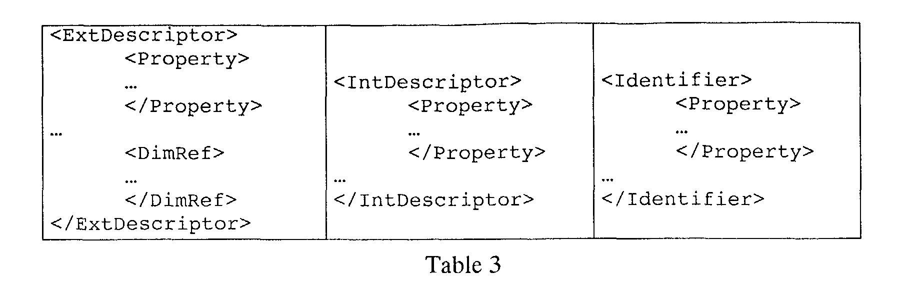

The reference to the validity region, as defined by *tag* DimRef, is esploded in the following Table 4.

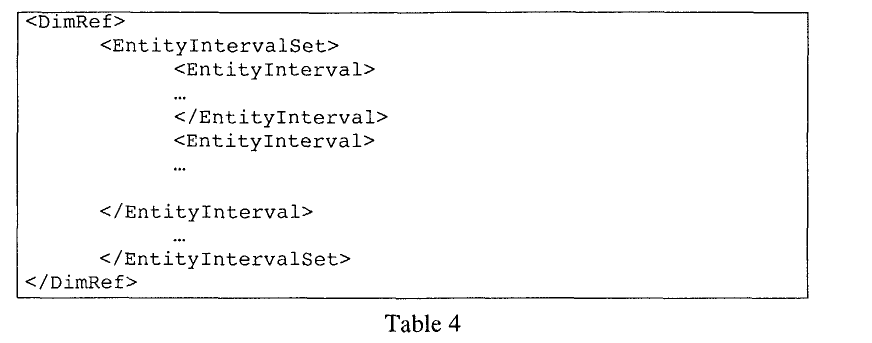

On Table 4, *tag* EntityIntervalSet defines the validity region as a set of hypercubes whose elements are defined by means of *tag* Entitylnterval, the dimension of the latter being equal to the cardinality defined in MediaAsset.

An examplary Entitylnterval is esploded in Table 5.

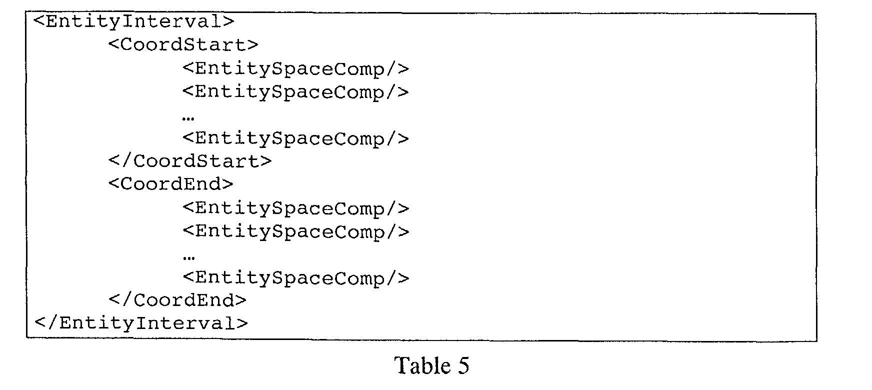

*Tags* CoordStart and CoordEnd respectively identify the start point and the end point of the hypercube, whole *tags* EntitySpaceComp constitute a dimensional vector, in which each element represents a coordinate within the local reference frame. As shown on Table 6, each such element contains the value of the coordinate, identified by the *tag* value, the measurement unit, identified with *tag* Munit, and its order within the dimensional vector, identified with the *tag* order.

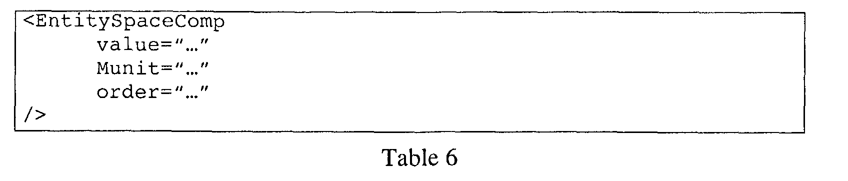

### Contextualizations

The contextualization of descriptors or identifiers within other descriptors or identifiers is obtained in the MADL language by means of the constructs DescrContext and IdentContext, as exemplified on Table 7.

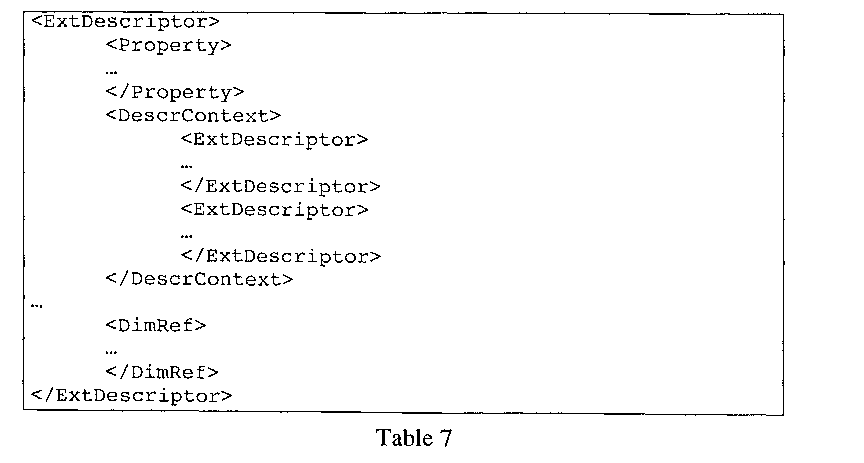

In the above table, block DescrContext should be noted, containing further *tags* ExtDescriptor, which are contextualized within the contextualizing descriptor ExtDescriptor, listed in the first line of the table.

### Representations and layers

It has already been stated that a descriptor or an identifier can be represented by a property. The representation of descriptors or identifiers is useful whenever it is desired to provide, for instance, their display. According to the embodiment herein disclosed as NADL language, in order to represent such concept in XML, the construct PropRepr is used, as shown on come illustrato in Table 8.

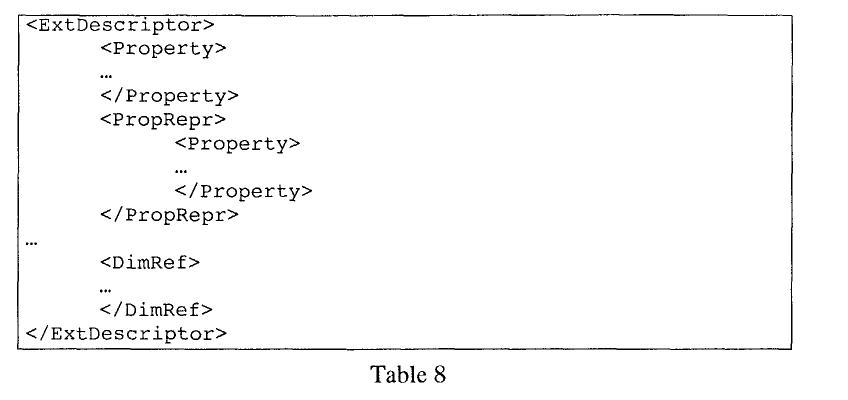

Construct Property within block PropRep is the property that represents the descriptor.

The properties represented by a *media asset* can be classified by *layers.* A layer is a property class defined by an arbitrary criterion. For instance, in a typical case of an audio/video source, the video layer comprises the properties extracted from the video signal, such as color histogram, representative images and the like, while the audio layer comprises the properties extracted from the audio signal, such as frequency spectrum and representative audio samples.

A property layer is represented in MADL by means of data structures DescrLayer and IdentLayer, which are indexable sets of representations of respectively descriptive and identificative properties. As for contextualization, it is also possible to build recursive layer structures, i.e. layers of layers, as exemplified on Table 10.

Table 9 shows the use of *tags* DescrLayer and IdentLayer, which comprise, among the other *tags* described above, also *tags* DescrIndex and IdentIndex, showing the index of the representation of the property within the set.

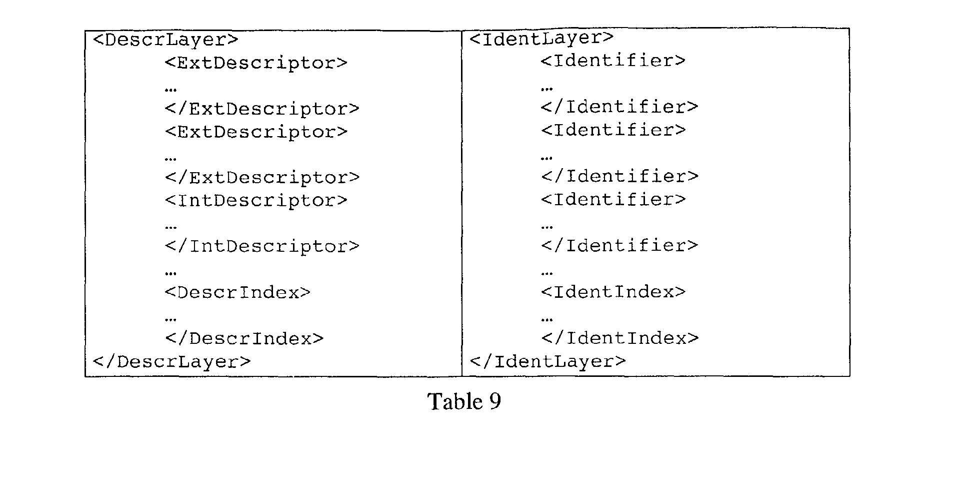

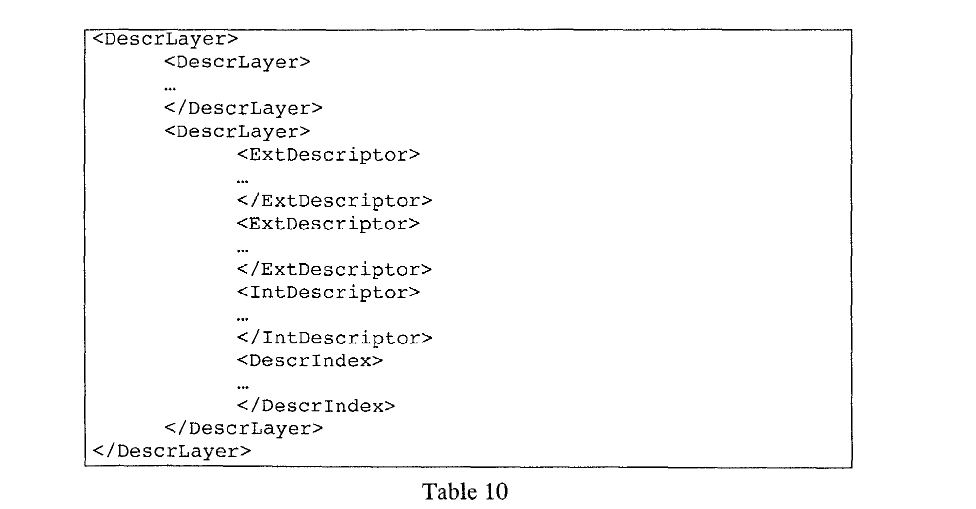

### Physical referencing

The XML representation of the functions for changing the local reference frame for a *media asset* is implemented by means of layer MapLayer.

Such layer contains the associations between local hypercubes to the representation of the *media asset* under consideration and references to the definitions of the mapping functions with the external reference frames, as shown on Table 11.

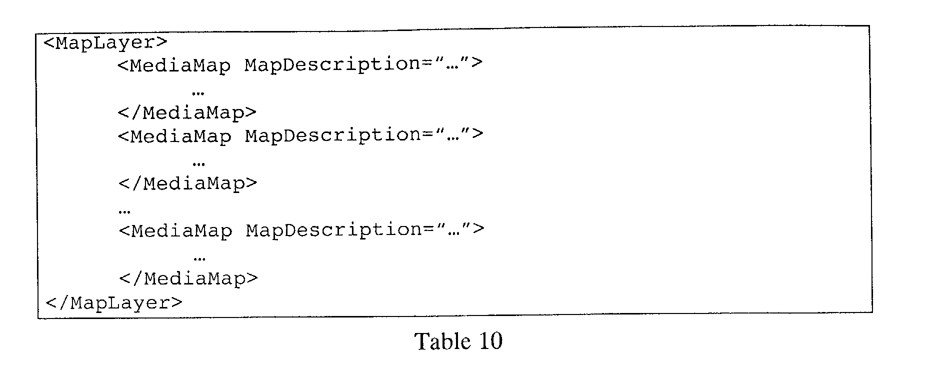

Constructs MediaMap MapDescription constitute the representation of the functions for the change of coordinates. In further detail, within block MediaMap is contained the association between internal hypercubes and mapping functions toward external reference frames, as represented by a sequence of (already disclosed) intervals EntityInterval, and peripheral definitions ExternalMediaRef, as shown on Table 11.

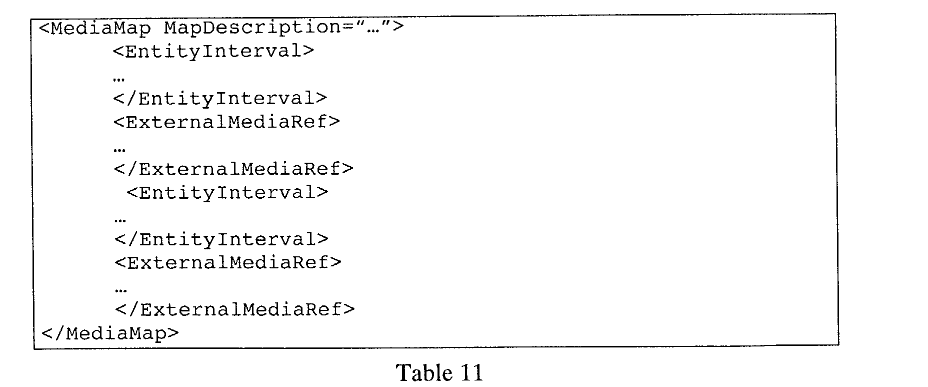

### Properties

With reference to Table 12, properties in the MADL language are represented by means of representative atoms that are identified by *tag* PropertyAtom or representative atom groups that are identified by *tag* PropertyAtomCluster. The representative atoms are containers of peripheral data structures, or extensions, representing the properties of the *media assets* according to the requirements and data models which have been determined by the interchange systems, with no constraints on any kind on the structure of the properties extending the kernel.

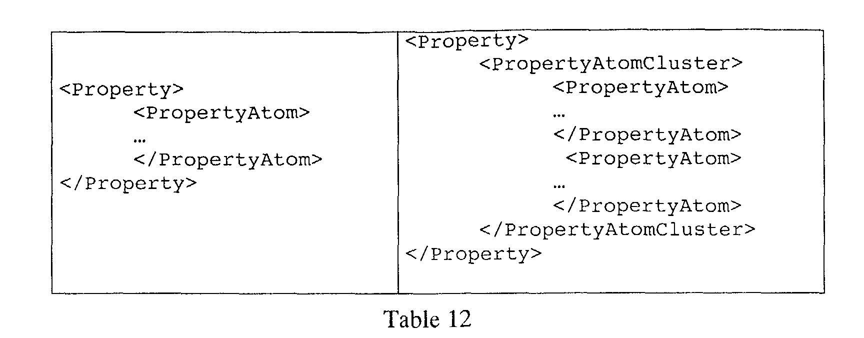

### Representations of relations

With reference to Figure 3, the MADL language further defines certain constructs for representing sets of related *media assets,* i.e. *media assets* between which relations exist. The main element in this context is identified by *tag* MediaAssetGroup. It is possible to define, within a group 60 of *media assets,* set roles 61 and relation roles 62. The former represent predicates bound to the reason why a given *media asset* belongs to the group under consideration, e.g. *"the MA identified by x is the first of this ordered group";* the latter represent predicates concerning the possible relations among the elements in the group, e.g. *"the MAs identified by x and y have the same weight".*

The relation roles 62 are expressed in the construct MediaAssetGraph, which is a generic graph provided with labellable, mono- and bi-directional line segments 63.

Table 13 contains an examplary definition of set roles 61, which are identified by *tag* Role, whole Table 14 shows the definition, in the MADL language, of a bidirectional line segment, whose ends are defined by means of *tags* MaFrom and MaTo followed by the reference to a *media asset* contained in MaRef.

### Extension mechanisms

Having now reference to Figure 4, the mechanism for extending the kernel 55 of the MADL language comprises three steps.

The first step comprises the definition of the peripheral structures of Description, of Identification, i.e. of the contents of the elements Property 410, of the set roles or relation roles, i.e. the contents of the elements Role 411, of the mapping functions, i.e. the contents of elements ExternalMediaRef 412 and the implementation of one or more DTDs (Document Type Definition) for such structures.

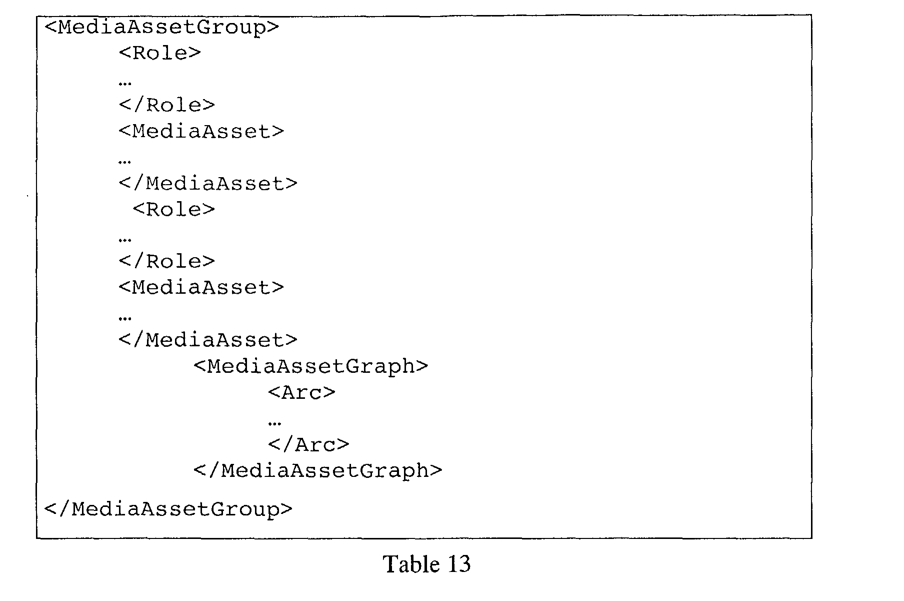

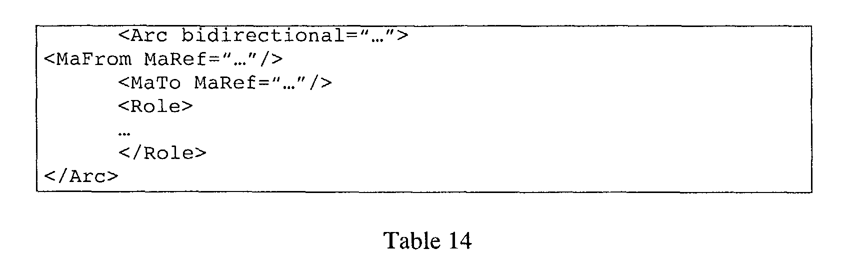

The second step consists of the implementation of an interface DTD 415 for connecting the previous defining DTDs and kernel 55.

Finally, it is necessary to create an overall DTD 56 including the interface DTD 410 and DTD 55 of the MADL kernel.

An exemplary implementation of the Document Type Definition of the MADl kernel is as shown in Listing 1 below.

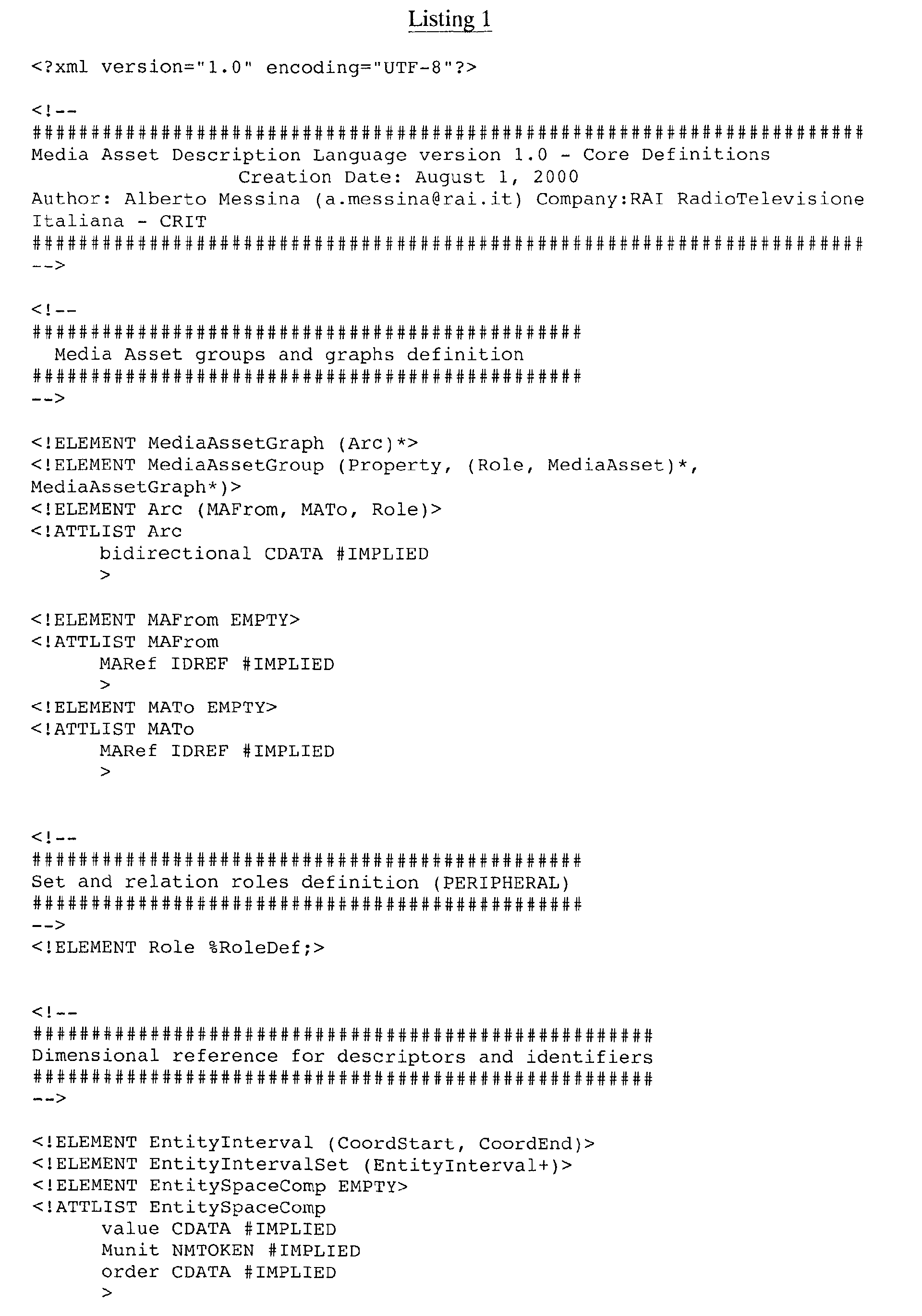

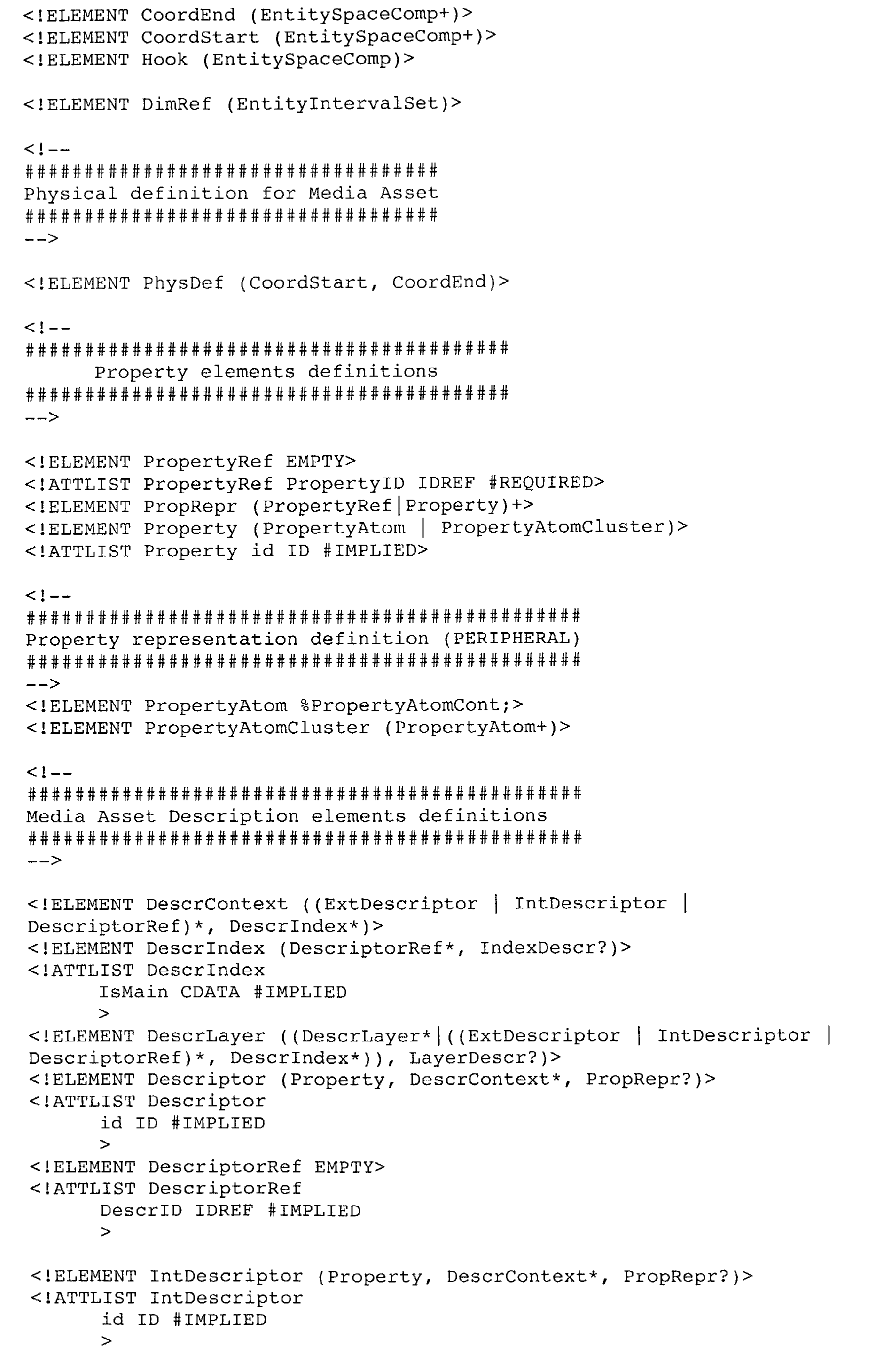

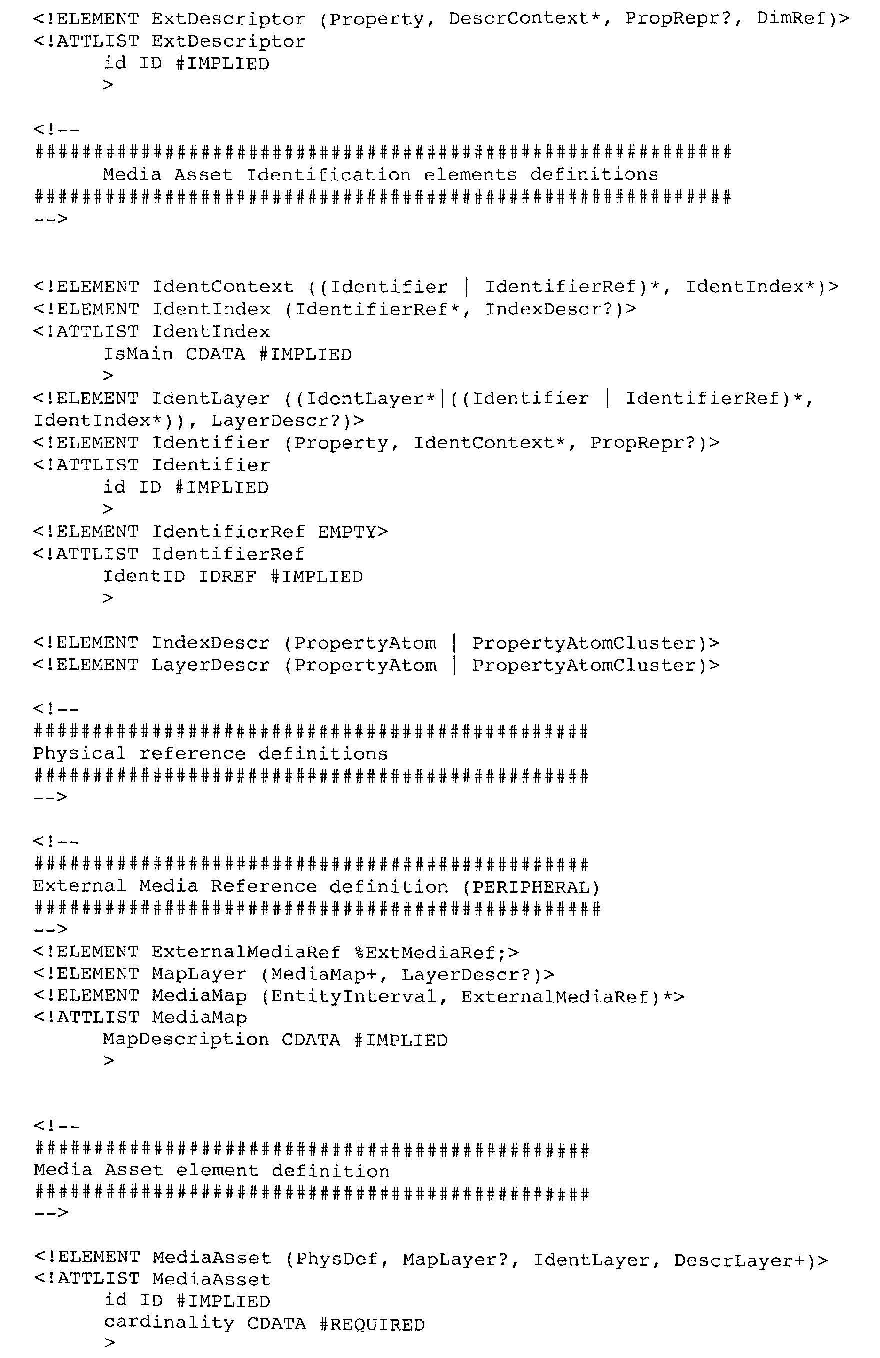

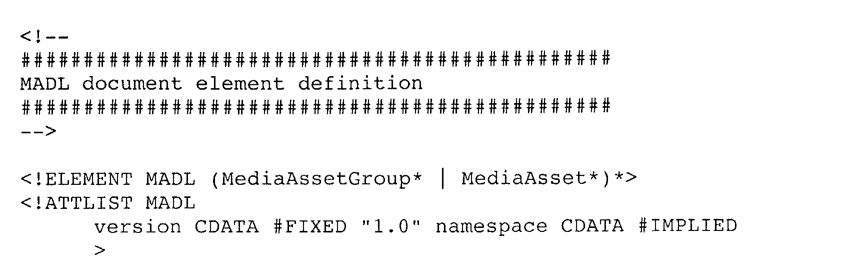

It has been shown above that the present method and system achieve the proposed object and finalities. In particular, it has been shown that the proposed solution is an optimal method for solving the problem of data exchange between *media asset management* systems. It has further been shown that the MADL language, based on XML, is structured so that it enables data interchange between heterogeneous systems, independently of the data model utilized by each.

It will be apparent that many changes will be obvious and can be readily carried out by a person skilled in the art without goning beyond the scope of the invention. For instance, it will be obvious for a person skilled in the art to replace the XML language with another *markup* language, and it is also understood that the terminology chosen for defining the language *tags* should not be regarded as limiting the teachings given above. Consequently, the scope of protection of the claims should not be limited by the illustrations or the preferred embodiments illustrated in the disclosure by way of examples, but, rather, the claims are intended to cover all the patentable novelty features residing in this invention, including all the features which would be regarded as equivalent by a person skilled in the art.

## Claims

1. A data interchange system for *media asset management* systems, wherein each *media asset management* system utilizes a proprietary data model for representing *media assets,* **characterized in that** the data interchange system comprises:
- an intermediate data model;
- a plurality of downloaders for mapping each proprietary data model onto the intermediate data model; and
- a plurality of adapters for mapping the intermediate data model onto each proprietary data model.

2. The system of claim 1, **characterized in that** said intermediate data model is an extension of a *markup* language.

3. The system of claim 2, **characterized in that** said *markup* language is XML.

4. The system of claim 3, **characterized in that** said extension is a dictionary of terms and structures representing *media assets.*

5. The system of claim 4, **characterized in that** said dictionary comprises a kernel defining structures of *media assets,* and a peripheral structure defining properties of *media assets* and relations among *media assets.*

6. The system of claim 4, **characterized in that** said kernel defines:
- an object representing a *media asset;*
- the dimensions of said *media asset;*
- a local geometric reference frame having a set of represented extensive properties as axes;
- a subset of properties for univocally identifying said *media asset;* and wherein said peripheral structures defines, in a manner independent of the kernel:
- descriptors and identifiers capable of representing descriptions and identifications of said *media asset;*
- definition of mapping systems between said local reference frame local to the *media assets* and external reference frames;
- set roles and reference roles.

7. The system of claim 6, **characterized in that** said properties are partitioned into intensive properties and extensive properties.

8. The system of claim 7, **characterized in that** pluralities of said descriptors and said identifiers are contextualized within another descriptor or identifier.

9. The system of claim 7, **characterized in that** pluralities of said descriptors and said identifiers are represented by a property.

10. The system of claim 9, **characterized in that** said pluralities are classified into *layers.*

11. A method for interchanging data in *media asset management* systems, wherein each *media asset management* system utilizes a proprietary data model for representing *media assets,* comprising the steps consisting of:
- defining an intermediate data model;
- mapping each proprietary data model of the *media asset management* system onto the intermediate data model;
- mapping the intermediate data model onto each proprietary data model.

12. The method of claim 11, **characterized in that** the step of defining an intermediate data model comprises the step of extending a *markup* language.

13. The method of claim 12, **characterized in that** said *markup* language is XML.

14. The method of claim 13, **characterized in that** said step of extending a *markup* language comprises defining a dictionary of terms and structures capable of representing *media assets.*

15. The method of claim 14, **characterized in that** the step of defining a dictionary of terms and structures comprises defining a kernel and a peripheral structure.

16. The method of claim 15, **characterized in that** said kernel defines:
- an object representing a *media asset;*
- the dimensions of said *media asset;*
- a local geometric reference frame having a set of represented extensive properties as axes;
- a subset of properties for univocally identifying said *media asset;* and wherein said peripheral structures defines, in a manner independent of the kernel:
- descriptors and identifiers capable of representing descriptions and identifications of said *media asset;*
- definition of mapping systems between said local reference frame local to the *media assets* and external reference frames;
- set roles and relation roles.

17. The method of claim 15, further comprising the step of partitioning said properties into intensive and extensive properties.

18. The method of claim 17, further comprising the step of contextualizing pluralities of said descriptors and said identifiers within another descriptor or identifier.

19. The method of claim 17, further comprising the step of representing pluralities of said descriptors and said identifiers by means of a property.

20. The method of claim 19, further comprising the step of classifying said properties into *layers.*
